# EUROPÄISCHE PATENTSCHRIFT

(11) **EP 2 309 138 B1**
(45) Veröffentlichungstag und Bekanntmachung des Hinweises auf die Patenterteilung: **04.11.2015**
(21) Anmeldenummer: 10177707.6
(22) Anmeldetag: 20.09.2010
(51) Int. Cl.: F16B 13/06, F16B 13/08

(54) **Spreizdübel**
Expansion anchor
Piton à expansion

(30) Priorität: 06.10.2009 DE 102009045345
(43) Veröffentlichungstag der Anmeldung: 13.04.2011
(73) Patentinhaber: HILTI Aktiengesellschaft, 9494 Schaan (LI)
(72) Erfinder: Wissling, Matthias, 9000 St. Gallen (CH); Schäffer, Marc, 6800 Feldkirch-Nofels (AT)
(74) Vertreter: Hilti Aktiengesellschaft Corporate Intellectual Property

(56) Entgegenhaltungen:
- EP-A1- 0 627 567
- EP-B1- 1 243 801
- US-A- 3 750 519

## Beschreibung

Die Erfindung betrifft einen mehrteiligen Spreizdübel, der im Oberbegriff des Patentanspruchs 1 genannten Art. Ein solcher Spreizdübel weist als ein erstes Teil eine Spreizhülse auf, die als deren Elemente mehrere durch Längsschlitze voneinander getrennte Spreizlappen aufweist, und weist als ein zweites Teil einen Spreizkörper auf, der in die Spreizhülse einziehbar ist und einen konischen Abschnitt zum radialen Aufweiten der Spreizhülse aufweist, wobei der konische Abschnitt als dessen Elemente in der Längsachse verlaufende Kanten aufweist, wobei einer der Teile des Spreizdübels eine geradzahlige Anzahl der entsprechenden Elemente und der andere Teil des Spreizdübels eine ungeradzahlige Anzahl der entsprechenden Elemente aufweist.

Gattungsgemässe mehrteilige Spreizdübel sind beispielsweise aus der US 3,750,519 A bekannt. Sie werden in ein zuvor in einem Untergrund, z. B. in einer Wand oder einer Decke eines Bauteils, erstelltes Bohrloch eingesetzt. Durch Einziehen des Spreizkörpers in die Spreizhülse wird diese radial aufgeweitet und der Spreizdübel Im Untergrund verankert.

Aus der EP 1 243 801 B1 ist ein mehrteiliger Spreizdübel bekannt, der als ein erstes Teil eine Spreizhülse aufweist, die als deren Elemente mehrere durch Längsschlitze voneinander getrennte Spreizlappen aufweist, und der als ein zweites Teil einen Spreizkörper aufweist, der in die Spreizhülse einziehbar ist und einen konischen Abschnitt zum radialen Aufweiten der Spreizhülse aufweist, wobei der konische Abschnitt als dessen Elemente in der Längsachse verlaufende Kanten aufweist. Die Anzahl der in der Längsachse verlaufenden Kanten des Spreizkörpers entspricht der Anzahl der Spreizlappen der Spreizhülse, womit jedes Element der Spreizhülse von den Konusflächen zwischen den Kanten geführt wird.

Nachteilig an der bekannten Lösung ist, dass zum radialen Aufweiten der Spreizhülse infolge der Anlage der Spreizlappen an den Konusflächen zwischen den Kanten eine hohe Setzenergie erforderlich ist.

Aufgabe der Erfindung ist es, einen Spreizdübel zu schaffen, der einfach setzbar ist und der hohe Auszugslasten aufweist.

Die Aufgabe ist durch die Merkmale des unabhängigen Anspruchs gelöst. Vorteilhafte Weiterbildungen sind in den Unteransprüchen dargelegt.

Ein erfindungsgemässer Spreizdübel ist dadurch gekennzeichnet, dass der Spreizkörper zumindest im Bereich des konischen Abschnitts in der Längsachse tordiert ist.

Bei einem gattungsgemässen Spreizdübel weist einer der Teile des Spreizdübels eine geradzahlige Anzahl der entsprechenden Elemente und der andere Teil des Spreizdübels eine ungeradzahlige Anzahl der entsprechenden Elemente auf.

Aufgrund der unterschiedlichen Anzahl wird gewährleistet, dass beim Einziehen des Spreizkörpers in die Spreizhülse diese nur punktuell auf dem konischen Abschnitt des Spreizkörpers aufliegt. Dadurch wird die Reibfläche und somit die initiale innere Reibung, als Integration der Reibspannungen über die Reibfläche zwischen Spreizkörper und Spreizhülse, minimiert, so dass eine wesentlich geringere Setzenergie zum Verankern des Spreizdübels im Bohrloch als gegenüber einem herkömmlichen Spreizdübel erforderlich ist. Auf die Anordnung einer Trennschicht, um eine geringe initiale Haftreibung zwischen dem Spreizkörper und der Spreizhülse sicherzustellen, kann verzichtet werden. Aufgrund der geringen initialen Haftreibung wird zudem ein Mitdrehen der Spreizhülse im Bohrloch beim Beginn des Setzvorgangs beziehungsweise bei Beginn des Einziehvorgangs des Spreizkörpers in die Spreizhülse erschwert beziehungsweise verhindert.

Der konische Abschnitt des Spreizkörpers weist einen mehrkantigen Querschnitt auf. Unter Querschnitt wird in diesem Zusammenhang der Querschnitt des Spreizkörpers verstanden, welcher eine Ebene aufspannt, auf welcher die Längsachse des Spreizdübels senkrecht steht. Die Abschnitte zwischen den Kanten des konischen Abschnitts des Spreizkörpers verlaufen im Querschnitt gekrümmt und/oder gerade. Vorzugsweise ist der konische Abschnitt des Spreizkörpers im Querschnitt polygonförmig und weist weiter vorteilhaft gleich lang ausgebildete Abschnitte zwischen benachbarten Kanten auf.

Da die Spreizhülse auch während dem radialen Aufweiten nicht vollständig flächig an dem konischen Abschnitt des Spreizkörpers anliegt, sind Spalte zwischen der Spreizhülse und dem Spreizkörper vorhanden, in welche vorteilhaft definiert Bohrmehl eindringen kann. Das in den Spalt eingedrungene Bohrmehl erhöht, insbesondere gegen Ende des Einziehvorgangs, die Reibung zwischen der Spreizhülse und dem Spreizkörper, womit im gesetzten Zustand eine hohe Sicherheit gegen Durchzug des Spreizkörpers durch die Spreizhülse unter Belastung gewährleistet ist. Vorteilhaft beträgt das Verhältnis zwischen dem Teil mit gerader Anzahl der Elemente und dem Teil mit ungerader Anzahl der Elemente 1.5:1 bis 4.0:1, insbesondere 2.0:1 bis 3.0:1. Beispielsweise weist der Teil mit der geraden Anzahl acht Elemente und der Teil mit der ungeraden Anzahl drei Elemente auf. In einer weiteren, nicht abschliessenden Ausführung weist der Teil mit der geraden Anzahl sechs Elemente und der Teil mit der ungeraden Anzahl drei Elemente auf.

In einer nicht von der vorliegenden Erfindung erfassten Variante sind zudem Spreizdübel vorteilhaft, bei denen die beiden Teile des Spreizdübels jeweils Elemente in gerader oder in ungerader Anzahl und die vorgenannten Verhältnisbereiche aufweisen. Beispielsweise weist der eine Teil acht oder sechs Elemente und der andere Teil zwei Elemente auf.

Vorzugsweise weist der Spreizkörper eine geradzahlige Anzahl von in der Längsachse verlaufenden Kanten und die Spreizhülse weist eine ungeradzahlige Anzahl von Spreizlappen auf, womit eine einfache Fertigung des Spreizdübels als Massenprodukt gewährleistet ist.

Alternativ weist der Spreizkörper eine ungeradzahlige Anzahl von in der Längsachse verlaufenden Kanten und die Spreizhülse weist eine geradzahlige Anzahl von Spreizlappen auf.

Bevorzugt weist der konische Abschnitt des Spreizkörpers im Querschnitt einen maximalen, durch die von den in der Längsachse verlaufenden Kanten laufenden Aussenkreisdurchmesser auf, der dem 0.8-fachen bis 1.4-fachen eines von der Spreizhülse definierten, maximalen Aussenkreisdurchmessers ist, womit bei gleicher oder gar niedriger Setzenergie höhere Auszugslasten als bei einem herkömmlichen Spreizanker erreicht werden. Des Weiteren sind bei dem erfindungsgemässen Spreizdübel die Auszugslasten wesentlich unabhängiger von der erstellten Bohrlochgeometrie als es bei einem herkömmlichen Spreizanker der Fall ist. Unter dem maximalen Aussenkreisdurchmessers der Spreizhülse wird in diesem Zusammenhang der Durchmesser des Hüllkreises verstanden, der die Aussenwandung und gegebenenfalls vorhandene Vorsprünge, wie Haltenasen und dergleichen, einschliesst. Insbesondere bei einer Spreizhülse ohne Vorsprünge beträgt der maximale Aussenkreisdurchmesser des Spreizkörpers vorteilhaft dem 0.9-fachen bis 1.1-fachen des von der Spreizhülse definierten, maximalen Aussenkreisdurchmessers, wobei dieses Verhältnis insbesondere in harten Untergründen, wie z. B. Beton, vorteilhaft ist. Ist der Spreizdübel insbesondere für weiche Untergründe, wie z. B. Porenbeton, ausgelegt, kann auch ein grösseres Verhältnis gewählt werden, bei dem der maximale Aussenkreisdurchmesser des Spreizkörpers vorteilhaft dem 1.1-fachen bis 1.3-fachen des von der Spreizhülse definierten, maximalen Aussenkreisdurchmessers

Vorzugsweise verlaufen die in der Längsachse verlaufenden Kanten des konischen Abschnitts des Spreizkörpers gekrümmt, womit ein einfaches Aufspreizen der Spreizhülse gewährleistet wird und somit verhältnismässig geringe Setzenergie zum Setzen des Spreizdübels erforderlich ist. Vorteilhaft sind die in der Längsachse verlaufenden Kanten in Bezug auf die Längsachse des Spreizdübel nach aussen gekrümmt beziehungsweise nach aussen konvex, so dass die erforderliche Setzenergie zum Setzen des Spreizdübels gegen Ende des Setzvorgangs zunimmt und dadurch dem Anwender das Erreichen der vollständigen Verankerung des Spreizdübels im Bohrloch für ihn spürbar angezeigt wird. Durch diese Massnahme lässt sich zudem ein unabsichtliches Durchziehen infolge eines zu gross aufgebrachten Drehmomentes in vorteilhafter Weise verhindern und der gesetzte Spreizdübel weist ein vorteilhaftes Nachspreizen insbesondere in einem gerissenen Untergrund auf. Alternativ vorteilhaft sind die in der Längsachse verlaufenden Kanten in Bezug auf die Längsachse des Spreizdübels nach innen gekrümmt beziehungsweise nach aussen konkav, womit die erforderliche Setzenergie ebenfalls beeinflussbar ist. In einer weiteren Ausführungsform können unterschiedliche Ausgestaltungen der in der Längsachse verlaufenden Kanten, z. B. linear, nach aussen und/oder nach innen gekrümmt verlaufend, an einem Spreizkörper kombiniert werden.

Erfindungsgemäss ist der Spreizkörper zumindest im Bereich des konischen Abschnitts in der Längsachse tordiert, d. h. verdrillt, womit die Innenseite der Spreizhülse beim Einzelhen des Spreizkörpers immer an zueinander radial versetzten Bereichen in Anlage kommt und entsprechend aufgeweitet wird. Dadurch wird ein einfaches und vorteilhaftes radiales Aufweiten der Spreizhülse gewährleistet und beispielsweise ein Einrasten einer Kante in einen Schlitz zwischen den Spreizlappen verhindert.

Vorzugsweise ist der Spreizkörper an einem freien Ende eines Bolzenkörpers vorgesehen und die Spreizhülse umgibt den Bolzenkörper zumindest bereichsweise, womit dem Anwender der mehrteilige Spreizdübel als ein Montageteil zur Verfügung steht. Derartige Spreizdübel werden auch als Bolzenanker bezeichnet.

In einer Variante der Erfindung weist der Spreizkörper ein Anschlussmittel für ein Bolzenelement auf, welches nachträglich und entsprechend den vorhandenen Anforderungen an dem Spreizkörper festlegbar ist.

Bevorzugt umfasst das Anschlussmittel eine Bohrung im Spreizkörper, in der ein Festlegemittel für das Bolzenelement vorgesehen ist, womit das Bolzenelement ohne Beeinflussung der Spreizhülse an dem Spreizkörper festlegbar ist Vorteilhaft ist das Festlegemittel ein Innengewinde, in welches ein Aussengewinde des Bolzenelementes einschraubbar ist. Somit kann als Bolzenelement beispielsweise ein z. B. bedarfsweise abgelängtes Stangenelement mit entsprechend ausgebildeten Aussengewinde, wie beispielsweise eine Gewindestange, als Bolzenelement verwendet werden.

Vorzugsweise weist der Spreizdübel bereits werkseitig ein mit dem Spreizkörper verbundenes Bolzenelement auf, so dass dem Anwender dieser mehrteilige Spreizdübel als ein Montageteil zur Verfügung steht und als Ganzes setzbar ist.

Bevorzugt ist ein Anschlagabschnitt für die Spreizhülse an einem dem Spreizkörper abgewandten Ende der Spreizhülse vorgesehen, welches die axiale Verschiebung der Spreizhülse in eine dem Spreizkörper abgewandte Richtung entlang der Längsachse des Spreizdübels begrenzt. Bei einem Bolzenanker, bei dem der Spreizkörper an einem freien Ende des Bolzenkörpers ausgebildet ist, ist der Anschlagabschnitt vorteilhaft durch einen zum Spreizkörper beabstandeten, radial vorstehenden Absatz gebildet. Alternativ kann an einem Bolzenkörper oder an einem mit dem Spreizkörper verbindbaren Stangenelement ein zusätzliches Bauteil, wie beispielsweise eine Unterlegscheibe, als Anschlagelement z. B. formschlüssig festgelegt sein, welches einen Anschlagabschnitt für die Spreizhülse aufweist.

Für eine einfache und wirtschaftliche Herstellung des Spreizdübels ist der Spreizkonus vorteilhaft kaltgepresst aus einem Metall gefertigt. Weiter vorteilhaft ist der Spreizkonus an seinem, der Spreizhülse abgewandten Ende mit einer Vertiefung versehen, womit einerseits Material zur Fertigung des Spreizkörpers eingespart und andererseits ein Aufnahmeraum für am Bohrlochgrund vorhandenes Bohrmehl und Bohrklein geschaffen wird.

Die Spreizhülse ist vorteilhaft in einem Stanz-/Biegeverfahren aus einem Blech gefertigt. Für eine verbesserte Haftung der Spreizhülse an der Bohrlochwandung ist die Aussenseite der Spreizhülse vorteilhaft mit einer Struktur und insbesondere vorteilhaft mit nach aussen abragenden Erhebungen versehen, welche die Reibung zwischen der Spreizhülse und der Bohrlochwandung erhöhen und somit ein unerwünschtes Mitdrehen der Spreizhülse insbesondere zu Beginn des Setzvorgangs des Spreizdübels verhindern.

Es zeigen:
- Fig. 1: Ein Spreizdübel in Seitenansicht;
- Fig. 2: einen Teilschnitt durch den Spreizkörper des Spreizdübels gem. Fig. 1;
- Fig. 3: eine Ansicht auf den Spreizdübel gem. Linie III-III in Fig. 1;
- Fig. 4: eine Ansicht auf die Spreizhülse analog Fig. 3;
- Fig. 5: ein Spreizdübel in einem Teilschnitt;
- Fig. 6: eine Ansicht auf den Spreizdübel gem. Linie VI-VI in Fig. 5; und
- Fig. 7: ein Ausführungsbeispiel eines Spreizdübels gemäß der Erfindung in einer Teilseitenansicht.

Grundsätzlich sind in den Figuren gleiche Teile mit den gleichen Bezugszeichen versehen.

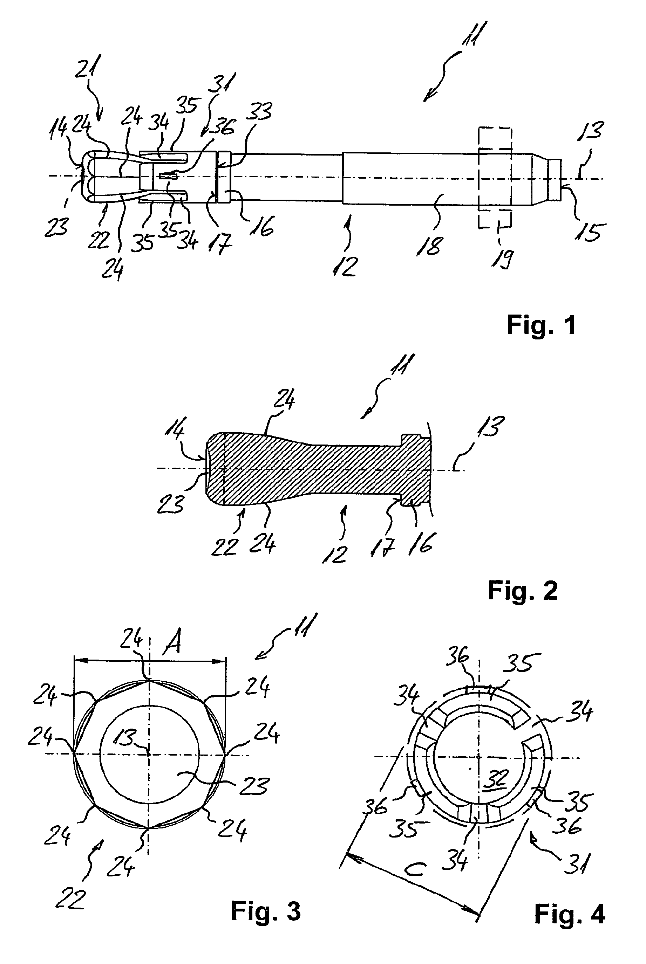

Der in den Figuren 1 bis 4 dargestellte mehrteiliger Spreizdübel 11 umfasst einen Bolzenkörper 12 mit einer Längsachse 13, an dessen ersten Ende 14 ein Spreizkörper 21 sowie benachbart dazu, in Richtung des zweiten Endes 15 des Bolzenkörpers 12 eine einen Innenraum 32 definierende Spreizhülse 31 vorgesehen ist. Benachbart zum zweiten Ende 15 weist der Bolzenkörper 12 einen Gewindeabschnitt 18 für eine hier gestrichelt dargestellte Mutter 19 auf.

Die Spreizhülse 31 als ein erstes Teil des Spreizdübels 11 weist als deren Elemente drei und somit eine ungeradzahlige Anzahl von durch Längsschlitze 34 voneinander getrennte Spreizlappen 35 auf. Die Spreizhülse 31 umgibt bereichsweise den Bolzenkörper 12 benachbart zum Spreizkörper 21. Beabstandet zum Spreizkörper 21 ist ein Absatz 16 am Bolzenkörper 12 vorgesehen, welcher einen Anschlagabschnitt 17 für die Spreizhülse 31 an einem dem Spreizkörper 21 abgewandten Ende 33 der Spreizhülse 31 bildet. An jedem der Spreizlappen 35 ist jeweils eine radial vorstehende Haltenase 36 vorgesehen, welche beim Einführen des Spreizdübels 11 in das Bohrloch mit deren Wandung in Anlage kommt und beim Ausspreizvorgang der Spreizhülse 31 ein Mitdrehend derselben verhindert.

Der Spreizkörper 21 als ein zweites Teil des Spreizdübels 11 ist koaxial zu der Längsachse 13 zur Spreizhülse 31 angeordnet und in den Innenraum 32 der Spreizhülse 31 einziehbar. Der Spreizkörper 21 weist einen konischen Abschnitt 22 zum radialen Aufweiten der Spreizhülse 31 auf, welcher sich in Richtung der Spreizhülse 31 beziehungsweise in Richtung des zweiten Endes 15 des Bolzenkörpers 12 verjüngt. Der Spreizkörper 21 ist an seinem freien Ende mit einer Vertiefung 23 versehen.

Der konische Abschnitt 22 des Spreizkörpers 21 weist als dessen Elemente acht und somit eine geradzahlige Anzahl von in der Längsachse 13 verlaufenden Kanten 24 auf, welche nach aussen gekrümmt verlaufen. Der konische Abschnitt 22 des Spreizkörpers 21 weist einen polygonalen Querschnitt auf, der einen maximalen, durch die von den in der Längsachse 13 verlaufenden Kanten 24 gebildeten Aussenkreisdurchmesser A auf, der dem 0.9-fachen bis 1.1-fachen eines von der Spreizhülse 31 definierten, maximalen Aussenkreisdurchmessers C ist.

Nach dem Setzen des Spreizdübels 11 in einem zuvor erstellten Bohrloch wird z. B. mittels der an einem Anbauteil anliegenden Mutter 19, der Bolzenkörper axial, in Richtung der Längsachse 13 versetzt, wobei der Spreizkörper 21 in die Spreizhülse 31 gezogen und dabei die Spreizhülse 31 zur Verankerung des radial Spreizdübels 11 im Bohrloch radial aufgeweitet wird.

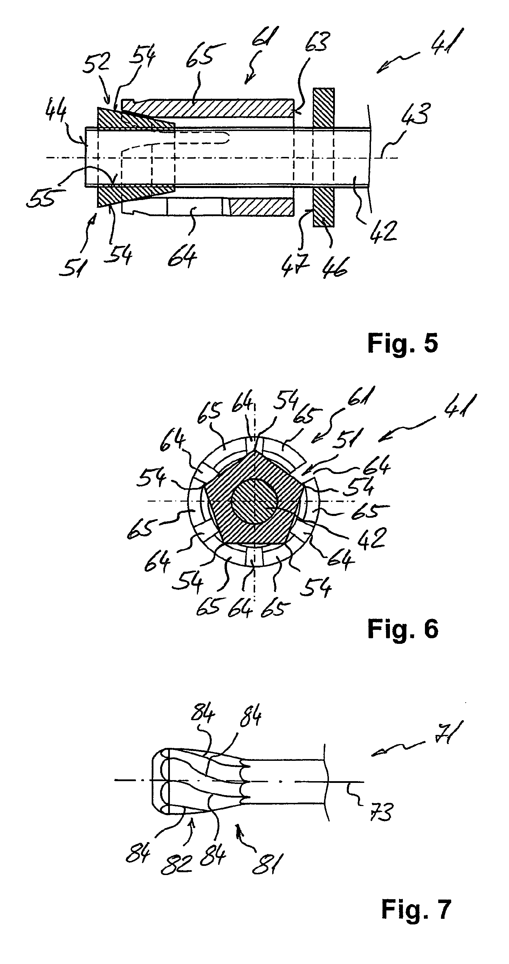

Der in den Figuren 5 und 6 dargestellte mehrteilige Spreizdübel 41 umfasst eine mit einem Aussengewinde versehene Gewindestange als Bolzenelement 42, das eine Längsachse 43 definiert. An dessen ersten Ende 44 ist ein Spreizkörper 51 aufgeschraubt sowie benachbart dazu, in Richtung des anderen Endes des Bolzenelementes 12 eine einen Innenraum definierende Spreizhülse 61 vorgesehen.

Die Spreizhülse 61 als ein erstes Teil des Spreizdübels 41 weist als deren Elemente sechs und somit eine geradzahlige Anzahl von durch Längsschlitze 64 voneinander getrennte Spreizlappen 65 auf. Die Spreizhülse 61 umgibt bereichsweise das Bolzenelement 42 benachbart zum Spreizkörper 51. Beabstandet zum Spreizkörper 51 ist eine Ringscheibe 46 am Bolzenelement 42 festgelegt, welche einen Anschlagabschnitt 47 für die Spreizhülse 61 an einem dem Spreizkörper 51 abgewandten Ende 63 der Spreizhülse 61 bildet.

Der Spreizkörper 51 als ein zweites Teil des Spreizdübels 41 ist koaxial zu der Längsachse 43 zur Spreizhülse 61 angeordnet und in den Innenraum der Spreizhülse 61 einziehbar. Der Spreizkörper 51 weist einen konischen Abschnitt 52 zum radialen Aufweiten der Spreizhülse 61 auf, welcher sich in Richtung der Spreizhülse 61 beziehungsweise in Richtung des anderen Endes des Bolzenelementes 42 verjüngt. Der konische Abschnitt 52 des Spreizkörpers 51 weist als dessen Elemente fünf und somit eine ungeradzahlige Anzahl von in der Längsachse 43 verlaufenden Kanten 54 auf, welche linear verlaufen.

Der Spreizkörper 51 weist weiter als ein Anschlussmittel für das mit einem Aussengewinde versehene Bolzenelement 42 eine Bohrung 55 auf, in der als ein Festlegemittel für das Bolzenelement 42 ein Innengewinde vorgesehen ist, in welches das Aussengewinde des Bolzenelementes 42 einschraubbar ist.

Alternativ kann das Bolzenelement 42 ein separates Teil des Spreizdübels 41 sein, das der Anwender beispielsweise bedarfsweise ablängt und dann in den Spreizkörper 51 einschraubt.

In der Figur 7 ist der Spreizkörper 81 des Spreizdübels 71 im Bereich des konischen Abschnitts 82 in der Längsachse 73 tordiert. Die in der Längsachse 73 verlaufenden Kanten 84 verlaufen entsprechend verdrillt entlang des konischen Abschnitts 82. Ansonsten entsprechen die Merkmale des Spreizdübels 71 im Wesentlichen den Merkmalen des zuvor dargelegten Spreizdübels 11.

## Patentansprüche

1. Mehrteiliger Spreizdübel, der als ein erstes Teil eine Spreizhülse (31; 61), die als deren Elemente mehrere durch Längsschlitze (34; 64) voneinander getrennte Spreizlappen (35; 65) aufweist, und
der als ein zweites Teil einen Spreizkörper (21; 51; 81) aufweist, der in die Spreizhülse (31; 61) einziehbar ist und einen konischen Abschnitt (22; 52; 82) zum radialen Aufweiten der Spreizhülse (31; 61) aufweist, wobei der konische Abschnitt (22; 52; 82) als dessen Elemente in der Längsachse (13; 43; 73) verlaufende Kanten (24; 54; 84) aufweist,
wobei einer der Teile des Spreizdübels (11; 41; 71) eine geradzahlige Anzahl der entsprechenden Elemente und der andere Teil des Spreizdübels (11; 41; 71) eine ungeradzahlige Anzahl der entsprechenden Elemente aufweist, **dadurch gekennzeichnet, dass**
der Spreizkörper (81) zumindest im Bereich des konischen Abschnitts (82) in der Längsachse (73) tordiert ist

2. Spreizdübel nach Anspruch 1, **dadurch gekennzeichnet, dass** der Spreizkörper (21; 81) eine geradzahlige Anzahl von in der Längsachse verlaufenden Kanten (24; 84) und die Spreizhülse (31) eine ungeradzahlige Anzahl von Spreizlappen (35) aufweist.

3. Spreizdübel nach Anspruch 1 oder 2, **dadurch gekennzeichnet, dass** der konische Abschnitt (22; 52; 82) des Spreizkörpers (21; 51; 81) im Querschnitt einen maximalen, durch die von den in der Längsachse (13; 43; 73) verlaufenden Kanten (24; 54; 84) gebildeten Aussenkreisdurchmesser (A) aufweist, der dem 0.8-fachen bis 1.4-fachen eines von der Spreizhülse (31; 61) definierten, maximalen Aussenkreisdurchmessers (C) ist.

4. Spreizdübel nach einem der Ansprüche 1 bis 3, **dadurch gekennzeichnet, dass** die in der Längsachse (13) verlaufende Kanten (24) des konischen Abschnitts (22) des Spreizkörpers (21) gekrümmt verlaufen.

5. Spreizdübel nach einem der Ansprüche 1 bis 4, **dadurch gekennzeichnet, dass** der Spreizkörper (21; 81) an einem freien Ende (14) eines Bolzenkörpers (12) vorgesehen ist und die Spreizhülse (31) den Bolzenkörper (12) zumindest bereichsweise umgibt.

6. Spreizdübel nach einem der Ansprüche 1 bis 4, **dadurch gekennzeichnet, dass** der Spreizkörper (51) ein Anschlussmittel für ein Bolzenelement (42) aufweist.

7. Spreizdübel nach Anspruch 6, **dadurch gekennzeichnet, dass** das Anschlussmittel eine Bohrung (55) im Spreizkörper (51) umfasst, in der ein Festlegemittel für das Bolzenelement (42) vorgesehen ist, wobei das Festlegemittel optional ein Innengewinde ist, in welches ein Aussengewinde des Bolzenelementes (42) einschraubbar ist.

8. Spreizdübel nach Anspruch 6 oder 7, **gekennzeichnet durch** ein mit dem Spreizkörper (51) verbundenes Bolzenelement (42).

9. Spreizdübel nach einem der Ansprüche 1 bis 8, **dadurch gekennzeichnet, dass** ein Anschlagabschnitt (17; 47) für die Spreizhülse (31; 61) an einem dem Spreizkörper (21; 51) abgewandten Ende der Spreizhülse (33; 63) vorgesehen ist.

## Claims

1. Multi-piece expansion plug comprising as a first part an expanding sleeve (31; 61) possessing elements consisting of a plurality of expanding lobes (35; 65) separated from each other by longitudinal slits (34; 64), and
comprising as a second part an expansion body (21; 51; 81) which can be drawn into the expanding sleeve (31; 61) and has a tapered portion (22; 52; 82) for radially widening the expanding sleeve (31; 61), the tapered portion (22; 52; 82) possessing elements consisting of edges (24; 54; 84) extending in the longitudinal axis (13; 43; 73),
wherein one of the parts of the expansion plug (11; 41; 71) has an even number of corresponding elements and the other part of the expansion plug (11; 41; 71) has an odd number of corresponding elements, **characterized in that**
the expansion body (81) has a twist in its longitudinal axis (73) at least in the region of the tapered portion (82).

2. Expansion plug according to Claim 1, **characterized in that** the expansion body (21; 81) has an even number of edges (24; 84) extending in the longitudinal axis and the expanding sleeve (31) has an odd number of expanding lobes (35).

3. Expansion plug according to Claim 1 or Claim 2, **characterized in that** the tapered portion (22; 52; 82) of the expansion body (21; 51; 81) has in cross-section a maximum outer circle diameter (A) formed by the edges (24; 54; 84) extending in the longitudinal axis (13; 43; 73) which is from 0.8 to 1.4 times a maximum outer circle diameter (C) defined by the expanding sleeve (31; 61).

4. Expansion plug according to any one of Claims 1 to 3, **characterized in that** the edges (24) of the tapered portion (22) of the expansion body (21) extending in the longitudinal axis (13) are curvilinear.

5. Expansion plug according to any one of Claims 1 to 4, **characterized in that** the expansion body (21; 81) is provided at a free end (14) of a bolt body (12) and the expanding sleeve (31) surrounds at least part of the bolt body (12).

6. Expansion plug according to any one of Claims 1 to 4, **characterized in that** the expansion body (51) has a connection means for a bolt element (42).

7. Expansion plug according to Claim 6, **characterized in that** the connection means comprises a bore (55) within the expansion body (51) in which a fixing means for the bolt element (42) is provided, the fixing means optionally being a female screw thread into which a male screw thread of the bolt element (42) can be screwed.

8. Expansion plug according to Claim 6 or Claim 7, **characterized by** a bolt element (42) connected to the expansion body (51).

9. Expansion plug according to any one of Claims 1 to 8, **characterized in that** a stop portion (17; 47) for the expanding sleeve (31; 61) is provided at an end of the expanding sleeve (33; 63) remote from the expansion body (21; 51).

## Revendications

1. Cheville à expansion en plusieurs parties, comportant une douille d'expansion (31 ; 61) en tant que première partie, laquelle douille d'expansion comporte, en tant qu'éléments, plusieurs languettes d'expansion (35 ; 65) séparées les unes des autres par des fentes longitudinales (34 ; 64), et
un corps d'expansion (21 ; 51 ; 81) en tant que seconde partie, lequel corps d'expansion peut être tiré dans la douille d'expansion (31 ; 61) et comporte une portion conique (22 ; 52 ; 82) pour élargir radialement la douille d'expansion (31 ; 61), dans laquelle la portion conique (22 ; 52 ; 82) comporte, en tant qu'éléments, des arêtes (24 ; 54 ; 84) s'étendant le long de l'axe longitudinal (13 ; 43 ; 73),
dans laquelle l'une des parties de la cheville à expansion (11 ; 41 ; 71) a un nombre pair d'éléments correspondants et l'autre partie de la cheville à expansion (11 ; 41 ; 71) a un nombre impair d'éléments correspondants, **caractérisée en ce que**
le corps d'expansion (81) est torsadé au moins dans la zone de la portion conique (82) le long de l'axe longitudinal (73).

2. Cheville à expansion selon la revendication 1, **caractérisée en ce que** le corps d'expansion (21 ; 81) a un nombre pair d'arêtes (24 ; 84) s'étendant le long de l'axe longitudinal et la douille d'expansion (31) a un nombre impair de languettes d'expansion (35).

3. Cheville à expansion selon la revendication 1 ou 2, **caractérisée en ce que** la portion conique (22 ; 52 ; 82) du corps d'expansion (21 ; 51 ; 81) a, en coupe transversale, un diamètre de cercle extérieur (A) maximal formé par les arêtes (24 ; 54 ; 84) s'étendant le long de l'axe longitudinal (13 ; 43 ; 73), lequel diamètre de cercle extérieur est égal à 0,8 fois à 1,4 fois un diamètre de cercle extérieur (C) maximal, défini par la douille d'expansion (31 ; 61).

4. Cheville à expansion selon l'une des revendications 1 à 3, **caractérisée en ce que** les arêtes (24) s'étendant le long de l'axe longitudinal (13) de la portion conique (22) du corps d'expansion (21) sont incurvées.

5. Cheville à expansion selon l'une des revendications 1 à 4, **caractérisée en ce que** le corps d'expansion (21 ; 81) est prévu sur une extrémité libre (14) d'un corps de boulon (12) et la douille d'expansion (31) entoure le corps de boulon (12) au moins dans certaines zones.

6. Cheville à expansion selon l'une des revendications 1 à 4, **caractérisée en ce que** le corps d'expansion (51) comporte des moyens de raccordement pour un élément de boulon (42).

7. Cheville à expansion selon la revendication 6, **caractérisée en ce que** les moyens de raccordement incluent un alésage (55) dans le corps d'expansion (51), dans lequel des moyens de blocage sont prévus pour l'élément de boulon (42), dans laquelle les moyens de blocage sont facultativement un filetage intérieur dans lequel peut être vissé un filetage extérieur de l'élément de boulon (42).

8. Cheville à expansion selon la revendication 6 ou 7, **caractérisée par** un élément de boulon (42) relié au corps d'expansion (51).

9. Cheville à expansion selon l'une des revendications 1 à 8, **caractérisée en ce qu'**une portion de butée (17 ; 47) pour la douille d'expansion (31 ; 61) est prévue sur une extrémité de la douille d'expansion (33 ; 63) opposée au corps d'expansion.
